# EUROPEAN PATENT APPLICATION

(11) **EP 4 843 667 A1**
(43) Date of publication of application: **25.11.2026**
(21) Application number: 26177485.5
(22) Date of filing: 08.05.2026
(51) Int. Cl.: B01J 35/39, B01J 23/42, B01J 35/30, B01J 37/02, B01J 37/34, C01B 3/042, B01J 21/06

(54) **SINGLE-ATOM PLATINUM CATALYST, METHOD FOR MANUFACTURING THE SAME, AND PHOTOCATALYTIC HYDROGEN PRODUCTION SYSTEM USING THE SAME**

(30) Priority: 19.05.2025 KR 20250064547; 04.06.2025 KR 20250072983
(71) Applicant: Ajou University Industry-Academic Cooperation Foundation, Suwon-si, Gyeonggi-do 16499 (KR)
(72) Inventor: Yu, Sungju, 18482 Hwaseong-si, Gyeonggi-do (KR); Park, Juneseo, 16593 Suwon-si, Gyeonggi-do (KR)
(74) Representative: Fink Numrich Patentanwälte PartmbB

(57) **Abstract**

A single-atom platinum catalyst, a method for manufacturing the same, and a photocatalytic hydrogen production system using the same are provided. The method for manufacturing the single-atom platinum catalyst comprises mixing and dispersing a support and a platinum precursor in an acidic reaction solution, and separating a solid from the reaction solution, drying, and heat-treating the solid, wherein the platinum precursor is mixed in the acidic reaction solution at a low concentration not exceeding a predetermined level. The photocatalytic hydrogen production system comprises a photocatalyst comprising a support and platinum dispersed at the atomic level on a surface of the support, and a reaction system capable of accommodating the photocatalyst and a reactant comprising at least water.

## Description

### BACKGROUND

### Field

The present invention relates to a single-atom platinum catalyst, a method for manufacturing the same, and a photocatalytic hydrogen production system using the same. More specifically, the present invention focuses on exploring conditions for stably immobilizing platinum in a single-atom state on a support surface and thereby seeking a way to maintain active sites of Pt even during long-term operation, and relates to a photocatalytic hydrogen production system and method.

### Description of Related Art

Despite their excellent hydrogen evolution performance, platinum-based photocatalysts face difficulties in implementing economically viable and mass-producible technologies due to the high cost of precious metals and the scarcity of resources. In particular, conventional platinum nanoparticle-based catalysts have limitations in industrial application due to low efficiency and high consumption of expensive precious metals.

Platinum catalysts have demonstrated excellent performance in various electrochemical and photocatalytic reactions and have played a key role in fields such as hydrogen production, fuel cells, and exhaust gas purification. However, since platinum is a precious metal that entails very high costs, dispersion technology capable of achieving high efficiency with a small amount is an important challenge. To this end, techniques for dividing platinum particles as finely as possible and uniformly dispersing them on a support surface have been studied, and when such dispersion is successfully achieved, there is a possibility of inducing efficient reactions by securing far more active sites with the same amount of platinum. In particular, if platinum atoms can be stably immobilized on defect structures or crystal planes of a specific support, positive effects on reaction selectivity and activity can also be expected.

However, when platinum is dispersed at the atomic level, high activity and selectivity may be exhibited initially, but as operation time increases, platinum atoms may migrate on the surface and aggregate or sinter with each other. Such aggregation reduces the active sites in the single-atom state, and as a result, there is a concern that the overall reaction efficiency may deteriorate and the catalyst lifetime may be shortened. The present invention focuses on providing a technology capable of dramatically increasing catalytic activity per unit mass by ultra-highly dispersing platinum at the atomic level, while at the same time drastically reducing the usage and cost of precious metals and securing long-term structural stability.

### SUMMARY

The problem to be solved by the present invention is to implement a technology that provides significantly improved hydrogen evolution performance compared to conventional catalysts by using a photocatalyst loaded with platinum dispersed at the atomic level. In particular, the present invention aims to secure an economical and sustainable hydrogen production technology by minimizing the amount of platinum used to less than 0.1% while maximizing catalytic activity and hydrogen evolution efficiency. In addition, effectively suppressing the sintering and aggregation of platinum particles that may occur in the process of dispersing platinum at the atomic level to secure catalytic activity and stability is an additional problem to be solved.

In one aspect, the present invention provides a method for manufacturing a single-atom platinum catalyst, comprising: mixing and dispersing a support and a platinum precursor in an acidic reaction solution; and separating a solid from the reaction solution, drying, and heat-treating the solid, wherein the platinum precursor is mixed in the acidic reaction solution at a low concentration not exceeding a predetermined level.

In one embodiment, the platinum precursor may be mixed in the acidic reaction solution at a low concentration such that a platinum loading amount in the single-atom platinum catalyst manufactured by the method for manufacturing a single-atom platinum catalyst is about 0.1 wt% or less.

In one embodiment, the pH of the acidic reaction solution may be about 1 to 3.

In one embodiment, the support may comprise at least one of TiO₂ or a carbon-based support.

In one embodiment, the support may be nanoparticles.

In one embodiment, the support may be nanoparticles having a size of about 20 to 30 nm.

In one embodiment, the platinum precursor may comprise at least one of a salt containing Pt or H₂PtCl₆.

In one embodiment, in the mixing and dispersing, the mixture may be dispersed in the reaction solution by sonication.

In one embodiment, the heat-treating may be performed at below about 900 °C.

In another aspect, the present invention provides a single-atom platinum catalyst manufactured by the method for manufacturing a single-atom platinum catalyst according to the embodiments of the present invention described above.

In one embodiment, the platinum loading amount of the single-atom platinum catalyst may be about 0.1 wt% or less.

In yet another aspect, the present invention provides a photocatalytic hydrogen production apparatus comprising: a photocatalyst comprising a support and platinum dispersed at the atomic level on the surface of the support; and a reaction system capable of accommodating the photocatalyst and a reactant comprising at least water.

In one embodiment, the support may comprise titanium dioxide (TiO₂).

In one embodiment, the content of platinum in the photocatalyst may be less than about 0.1 wt%.

In one embodiment, the photocatalytic hydrogen production apparatus may further comprise a light source unit that irradiates light onto the reaction system.

In one embodiment, the photocatalyst may be a photocatalyst manufactured under acidic conditions.

In yet another aspect, the present invention provides a photocatalytic hydrogen production method comprising: irradiating light onto a reaction system capable of accommodating a reactant comprising at least water, in the presence of a photocatalyst comprising a support and platinum dispersed at the atomic level on a surface of the support.

In one embodiment, the support may comprise titanium dioxide (TiO₂).

In one embodiment, the content of platinum in the photocatalyst may be less than about 0.1 wt%.

In one embodiment, the irradiated light may be sunlight or artificial light or artificial sunlight irradiated through a light source.

In one embodiment, the photocatalyst may be a photocatalyst manufactured under acidic conditions.

The present invention relates to a technology that dramatically improves the long-term stability of a platinum catalyst dispersed at the atomic level by controlling the platinum atomic density on the catalyst surface, while at the same time greatly improving the catalytic efficiency of hydrogen evolution reactions through a titanium dioxide model photocatalyst loaded with platinum particles dispersed at the atomic level. Specifically, by utilizing a photocatalyst loaded with highly dispersed platinum particles at the atomic level, a result of approximately 38-fold improvement in the hydrogen evolution reaction rate constant compared to platinum nanoparticles of 2 nm in size can be obtained, and a characteristic of approximately 86-fold increase in catalytic activity per platinum mass compared to a conventional 1% Pt nanoparticle-loaded catalyst is exhibited. Furthermore, by optimizing reaction conditions such as irradiation light source, temperature, pH, and catalyst dosage under solar light conditions, the possibility of maximizing catalytic activity is presented.

To this end, the present invention includes precisely controlling synthesis conditions such as pH and temperature to optimize the platinum atomic density on the support surface, and uniformly immobilizing platinum atoms on the support surface by utilizing physical dispersion techniques such as sonication. In addition, by optimizing the distance and density between platinum atoms, mobility and aggregation phenomena on the surface are minimized, and heat-treatment conditions are precisely controlled to induce platinum atoms to be stably immobilized on the catalyst surface and maintain activity. Such surface platinum atomic density control technology has the potential to improve the long-term stability and durability of the catalyst compared to conventional technologies, and higher activity maintenance can be expected even when using the same amount of precious metal. As a result, the catalyst lifetime can be extended and the replacement cycle can be reduced, and cost reduction effects for maintenance can also be expected.

The effect of the present invention lies in the ability to maximize catalytic activity through the technology of dispersing platinum at the atomic level. Specifically, the amount of precious metal used can be reduced to 1/10 or less compared to a conventional 1% Pt nanoparticle-loaded catalyst, and the catalytic activity per mass is improved 86-fold compared to a Pt nanoparticle-based catalyst. Due to these characteristics, catalyst costs can be dramatically reduced, enabling economic and efficient hydrogen production.

Furthermore, by securing long-term operational stability of the high-performance catalyst, the catalyst replacement cycle can be reduced, and maintenance costs can be reduced. As the activity and durability of the catalyst improve, it can contribute to enhancing competitiveness in various industrial fields such as hydrogen production, fuel cells, and photocatalysis, and the technology implemented in the present invention enables efficient utilization of precious metal resources, so that competitiveness enhancement in the fields of industrial mass production and eco-friendly hydrogen production as a sustainable low-precious-metal photocatalyst technology can be expected.

### BRIEF DESCRIPTION OF DRAWINGS

FIG. 1 is a HAADF-STEM image taken after a photoreaction of a conventional Pt/TiO₂ single-atom catalyst, showing results under control conditions in which aggregated platinum (Pt) particles are observed.
FIG. 2A is a diagram showing the size distribution of platinum (Pt) particles observed after a photoreaction of a conventional Pt/TiO₂ single-atom catalyst.
FIG. 2B is a diagram showing the size distribution of platinum (Pt) particles observed after a photoreaction of a conventional Pt/TiO₂ single-atom catalyst.
FIG. 3 is a diagram showing a HAADF-STEM image taken after a photoreaction of a Pt/TiO₂ single-atom catalyst with adjusted surface density.
FIG. 4 is a diagram comparing the hydrogen turnover frequency (TOF) of Pt/TiO₂ single-atom catalysts.
FIG. 5 is a diagram showing results of a photocatalytic hydrogen production reaction performed under simulated solar light conditions for 152 consecutive hours using a Pt/TiO₂ single-atom catalyst with adjusted surface density, according to an embodiment of the present invention.
FIG. 6 is a diagram showing results of a photocatalytic hydrogen production reaction performed under harsh conditions, i.e., at the maximum experimentally achievable light intensity, using a Pt/TiO₂ single-atom catalyst with adjusted surface density, according to an embodiment of the present invention.
FIG. 7 is a diagram comparing photocatalytic hydrogen production reaction performance of Pt/TiO₂ single-atom catalysts manufactured under an optimized heat-treatment temperature condition (below 900 °C) and a non-optimized condition (900 °C or above).
FIG. 8 is a diagram showing a photocatalytic hydrogen production apparatus according to an embodiment of the present invention.
FIG. 9 is a diagram showing a photocatalytic hydrogen production apparatus according to another embodiment of the present invention.
FIG. 10A is a diagram showing a gas chromatogram measured in a first run under identical reaction conditions for hydrogen quantification of a gas mixture generated in a hydrogen evolution reaction using a photocatalyst in which 0.03% platinum is dispersed at the atomic level.
FIG. 10B is a diagram showing a gas chromatogram measured in a second run under identical reaction conditions for hydrogen quantification of a gas mixture generated in a hydrogen evolution reaction using a photocatalyst in which 0.03% platinum is dispersed at the atomic level.
FIG. 10C is a diagram showing a gas chromatogram measured in a third run under identical reaction conditions for hydrogen quantification of a gas mixture generated in a hydrogen evolution reaction using a photocatalyst in which 0.03% platinum is dispersed at the atomic level.
FIG. 11A is a diagram showing a gas chromatogram measured in a first run under identical reaction conditions for hydrogen quantification of a gas mixture generated in a hydrogen evolution reaction using a photocatalyst in which 1% platinum is dispersed in nanoparticle form.
FIG. 11B is a diagram showing a gas chromatogram measured in a second run under identical reaction conditions for hydrogen quantification of a gas mixture generated in a hydrogen evolution reaction using a photocatalyst in which 1% platinum is dispersed in nanoparticle form.
FIG. 11C is a diagram showing a gas chromatogram measured in a third run under identical reaction conditions for hydrogen quantification of a gas mixture generated in a hydrogen evolution reaction using a photocatalyst in which 1% platinum is dispersed in nanoparticle form.
FIG. 12 is a diagram showing changes in hydrogen production amount over reaction time in hydrogen evolution reactions using photocatalysts based on 0% platinum, 0.03% platinum (atomic level), and 1% platinum (nanoparticles).
FIG. 13 is a diagram comparing hydrogen production rates per catalyst mass and per platinum mass of photocatalysts based on 0.03% platinum (atomic level) and 1% platinum (nanoparticles).
FIG. 14 is a diagram comparing changes in activity of hydrogen evolution reactions using photocatalysts synthesized under acidic, neutral, and basic conditions.
FIG. 15 is a diagram showing the H₂ production rate per total catalyst mass of Pt/TiO₂ photocatalysts according to Pt loading amount.
FIG. 16 is a diagram showing the H₂ production turnover frequency (TOF) per unit Pt atom of Pt/TiO₂ photocatalysts according to Pt loading amount.
FIG. 17 is a diagram reproducing experimental TOF and aggregation profiles using a structure-activity model.

### DETAILED DESCRIPTIONS

Hereinafter, embodiments of the present invention will be described in detail with reference to the accompanying drawings. Since the present invention may be embodied in various forms and modified in various ways, specific embodiments are illustrated in the drawings and described in detail in the text. However, this is not intended to limit the present invention to any particular disclosed form, and it should be understood to include all modifications, equivalents, and substitutes within the spirit and technical scope of the present invention. Like reference numerals are used for like elements throughout the description of each drawing. In the accompanying drawings, the dimensions of structures are shown enlarged compared to actuality for clarity of the present invention.

The terms used in the present application are used only to describe specific embodiments and are not intended to limit the present invention. Singular expressions include plural expressions unless the context clearly indicates otherwise. In the present application, terms such as "comprise" or "have" are intended to designate the presence of features, numbers, steps, operations, components, or combinations thereof described in the specification, and should be understood not to preclude in advance the possibility of the presence or addition of one or more other features, numbers, steps, operations, components, or combinations thereof. In the context of the present specification, terms such as "about" may mean about ±1%, about ±2%, about ±3%, about 4%, about ±5%, about ±6%, about ±7%, about ±8%, about ±9%, or about ±10% of the numerical value described in the specification.

In addition, descriptions of one aspect of the present invention may be applied in the same or similar manner to the same or similar configurations or terms in descriptions of other aspects.

Unless otherwise defined, all terms used herein, including technical and scientific terms, have the same meaning as commonly understood by a person of ordinary skill in the art to which the present invention belongs. Terms defined in commonly used dictionaries should be interpreted as having meanings consistent with the meanings they have in the context of the relevant technology and should not be interpreted in an idealized or overly formal sense unless explicitly defined in the present application.

The method for manufacturing a single-atom platinum catalyst according to an embodiment of the present invention comprises mixing and dispersing a support and a platinum precursor in an acidic reaction solution; and separating a solid from the reaction solution, drying, and heat-treating the solid, wherein the platinum precursor may be mixed in the acidic reaction solution at a low concentration not exceeding a predetermined level.

The role of the mixing and dispersing is to create conditions in which the support and the platinum precursor are uniformly mixed in the reaction solution, and the platinum precursor can effectively contact the surface of the support. In particular, acidic conditions can provide an environment capable of ensuring dispersion uniformity.

The reason for mixing the platinum precursor at a low concentration is to sufficiently secure the average distance between platinum atoms, thereby reducing the possibility of inducing aggregation or sintering, and to create a dispersion environment capable of stably maintaining the single-atom state. Such low concentration conditions can help increase the immobilization of platinum atoms on the support surface and minimize the loss of active sites even during long-term operation.

In one embodiment, the platinum precursor may be mixed in the acidic reaction solution at a low concentration such that the platinum loading amount in the single-atom platinum catalyst manufactured by the method for manufacturing a single-atom platinum catalyst is 0.1 wt% or less. This can sufficiently secure the average distance between platinum atoms on the support surface, which can act favorably in suppressing aggregation or sintering phenomena caused by inter-atomic interactions.

In another embodiment, the platinum precursor may be mixed in the acidic reaction solution at a low concentration such that the platinum loading amount in the single-atom platinum catalyst is 0.025 to 0.03 wt%. In another embodiment, the platinum precursor may be mixed in the acidic reaction solution at a low concentration such that the platinum loading amount is 0.025 to 0.05 wt%. In another embodiment, the platinum loading amount may be 0.025 to 0.054 wt%. In another embodiment, the platinum loading amount may be 0.025 to 0.09 wt%. In another embodiment, the platinum loading amount may be 0.025 to 0.1 wt%. In another embodiment, the platinum loading amount may be 0.03 to 0.05 wt%. In another embodiment, the platinum loading amount may be 0.03 to 0.054 wt%. In another embodiment, the platinum loading amount may be 0.03 to 0.09 wt%. In another embodiment, the platinum loading amount may be 0.03 to 0.1 wt%. In another embodiment, the platinum loading amount may be 0.05 to 0.054 wt%. In another embodiment, the platinum loading amount may be 0.05 to 0.09 wt%. In another embodiment, the platinum loading amount may be 0.05 to 0.1 wt%. In another embodiment, the platinum loading amount may be 0.054 to 0.09 wt%. In another embodiment, the platinum loading amount may be 0.054 to 0.1 wt%. In another embodiment, the platinum loading amount may be 0.09 to 0.1 wt%.

In one embodiment, the pH of the acidic reaction solution may be about 1 to 3. When the pH is excessively low, the platinum precursor may be overly stabilized and remain in the solution without being adsorbed onto the support surface. When the pH is excessively high, the platinum precursor may rapidly precipitate in the form of hydroxide and may not be uniformly adsorbed onto the support surface.

In one embodiment, the support may comprise at least one of TiO₂ or a carbon-based support. The material of the support is not particularly limited as long as it provides a surface on which the platinum precursor can be dispersed and immobilized and has physical and chemical properties capable of maintaining structural stability even during the heat-treatment process. In one embodiment, the support may be nanoparticles. In one embodiment, the support may be nanoparticles having a size of about 20 to 30 nm.

In one embodiment, the platinum precursor may comprise at least one of a salt containing Pt or H₂PtCl₆. The platinum precursor is not particularly limited as long as it stably exists in the reaction solution, can be adsorbed or dispersed on the support surface, and acts to allow platinum to be immobilized in a single-atom form through the heat-treatment process.

The method of dispersing materials in the reaction solution is not particularly limited. In one embodiment, the mixture may be dispersed in the reaction solution by sonication during the mixing and dispersing. Non-limiting examples of other dispersion methods may include mechanical stirring, high-speed shear mixing, ball milling, magnetic stirring, flow mixing, vibration mixing, micromixers, bubble injection stirring, electrostatic dispersion, and the like, and the selection may vary depending on the viscosity of the solution, particle size, structure of the reaction vessel, and the like.

The role of separating, drying, and heat-treating includes physical or chemical treatment to immobilize the dispersed platinum precursor on the support surface. The heat-treatment induces platinum ions to be fixed to the support in a single-atom state, and as a result, can help form a structure in which platinum is distributed at the atomic level without aggregating in the form of clusters.

The method or temperature of the heat-treatment is not particularly limited as long as it performs the above-described function. In one embodiment, the heat-treating may be performed at below about 900 °C.

The advantage of the method for manufacturing a single-atom platinum catalyst according to an embodiment of the present invention lies in the ability to induce platinum to be uniformly dispersed in a single-atom form on the support surface by mixing a low-concentration platinum precursor in an acidic reaction solution and heat-treating under precise conditions. Such a process can be implemented without complex equipment or expensive processes and can help minimize sintering of platinum and improve the immobilization of the single-atom state.

Meanwhile, the single-atom platinum catalyst according to an embodiment of the present invention may be manufactured through the method for manufacturing a single-atom platinum catalyst according to the embodiments of the present invention described above.

In one embodiment, the single-atom platinum catalyst may comprise a support; and platinum formed at the atomic level on the surface of the support. Therefore, since platinum exists in a single-atom form rather than in a particle form, more active sites can be secured even when using the same amount of platinum, and the reaction efficiency can be improved.

In one embodiment, the platinum loading amount of the single-atom platinum catalyst may be about 0.1 wt% or less. This can sufficiently secure the distance between platinum atoms to prevent aggregation and provide conditions capable of stably maintaining the single-atom state. Such low loading conditions can help improve the long-term stability and reproducibility of the catalyst and can act favorably in maximizing the efficiency of precious metal usage.

The advantage of the single-atom platinum catalyst according to an embodiment of the present invention lies in the ability to maintain high active sites even under low loading conditions. This means that platinum in single-atom form is stably immobilized on the support surface and can continue the reaction without aggregation or deactivation. Such a structure can suppress performance degradation of the catalyst even during long-term operation and can contribute to maintaining high durability and efficiency even in high-temperature and high-load environments such as hydrogen production and fuel cells.

In another embodiment, the platinum loading amount of the single-atom platinum catalyst may be 0.025 to 0.03 wt%. In another embodiment, the platinum loading amount may be 0.025 to 0.05 wt%. In another embodiment, the platinum loading amount may be 0.025 to 0.054 wt%. In another embodiment, the platinum loading amount may be 0.025 to 0.09 wt%. In another embodiment, the platinum loading amount may be 0.025 to 0.1 wt%. In another embodiment, the platinum loading amount may be 0.03 to 0.05 wt%. In another embodiment, the platinum loading amount may be 0.03 to 0.054 wt%. In another embodiment, the platinum loading amount may be 0.03 to 0.09 wt%. In another embodiment, the platinum loading amount may be 0.03 to 0.1 wt%. In another embodiment, the platinum loading amount may be 0.05 to 0.054 wt%. In another embodiment, the platinum loading amount may be 0.05 to 0.09 wt%. In another embodiment, the platinum loading amount may be 0.05 to 0.1 wt%. In another embodiment, the platinum loading amount may be 0.054 to 0.09 wt%. In another embodiment, the platinum loading amount may be 0.054 to 0.1 wt%. In another embodiment, the platinum loading amount may be 0.09 to 0.1 wt%.

The manner in which the single-atom platinum catalyst, according to an embodiment of the present invention operates is not particularly limited. For example, the single-atom platinum catalyst according to an embodiment of the present invention may operate as a photocatalyst. In this case, electrons excited by light energy play a role in inducing reactions at the platinum single atoms, and high reaction efficiency can be expected in photochemical processes such as hydrogen evolution reactions. In addition, the presence of platinum in a single-atom form can contribute to suppressing electron-hole recombination and improving reaction selectivity. Such an operating mechanism can be stably maintained under various reaction conditions and can be usefully utilized in constructing high-efficiency photocatalytic systems.

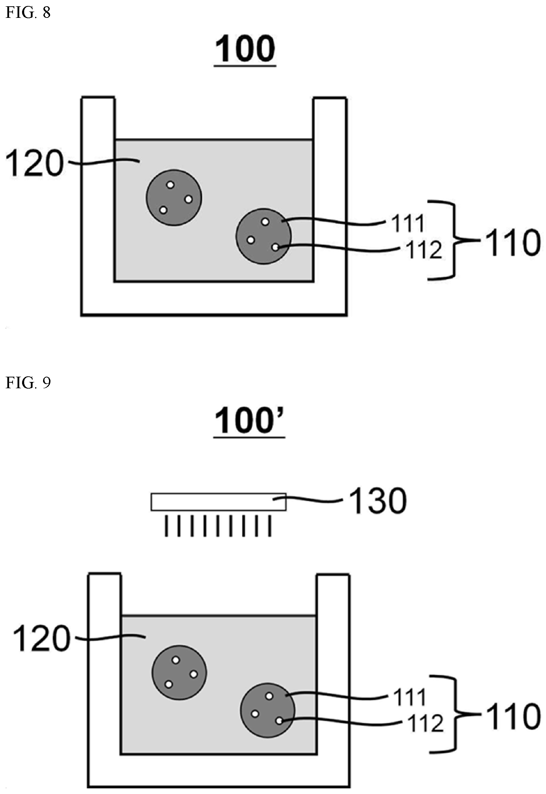

FIG. 8 illustrates a photocatalytic hydrogen production apparatus according to an embodiment of the present invention. FIG. 8 is for clear description of the arrangement and coupling relationship between components, and the relative sizes or proportions may be shown differently from actuality. Therefore, the size, proportion, or shape of each component shown in FIG. 8 is not intended to limit the scope of the invention but is merely a schematic illustration for convenience of description.

Referring to FIG. 8, the photocatalytic hydrogen production apparatus 100 according to an embodiment of the present invention may comprise a photocatalyst 110 comprising a support 111 and platinum 112 dispersed at the atomic level on the surface of the support 111; and a reaction system 120 capable of accommodating the photocatalyst 110 and a reactant comprising at least water.

The role of support 111 is to function as a fixed support on which platinum can be stably dispersed within the photocatalyst, thereby helping to suppress the phenomenon of platinum migrating or aggregating during catalytic reactions.

In one embodiment, the support 111 may comprise titanium dioxide (TiO₂). The advantage of titanium dioxide (TiO₂) lies in the ability to be used for a long period without structural deformation even under photocatalytic reaction conditions, based on its excellent chemical stability and strong oxidizing power.

In one embodiment, the support 111 may comprise titanium dioxide (TiO₂) particles. Using titanium dioxide as particles rather than as a structure has the advantage of greatly increasing the surface area of the photocatalyst and exposing more active sites with excellent reactivity. In particular, titanium dioxide in particle form can be more uniformly dispersed within the reaction system, which helps improve light absorption efficiency and can act favorably in inducing uniformly dispersed loading of platinum.

The platinum is dispersed at the atomic level on the surface of the support, which can contribute to maximizing the catalyst surface area and increasing the number of active sites, thereby improving the overall efficiency of the hydrogen evolution reaction. Platinum dispersed at the atomic level increases the possibility that each individual platinum atom can directly participate in the reaction compared to platinum in nanoparticle form, and as a result, much higher reactivity per unit mass can be expected.

In one embodiment, the content of platinum in the photocatalyst may be less than about 0.1 wt%. This is a significantly smaller amount compared to photocatalysts that load platinum in nanoparticle form, providing the possibility of significantly reducing precious metal usage. In particular, while conventional technologies require relatively large amounts of platinum to obtain high catalytic activity, applying the atomic-level dispersion technology according to the present invention can achieve equivalent or higher hydrogen evolution activity with a much smaller amount of platinum.

The role of the photocatalyst is to induce a reaction that absorbs light and generates hydrogen gas. In this process, the photocatalyst acts as a medium for converting light energy into chemical energy, and an efficient photocatalyst must balance factors such as light absorption efficiency, charge separation efficiency, and surface reaction efficiency.

FIG. 9 illustrates a photocatalytic hydrogen production apparatus according to another embodiment of the present invention.

Referring to FIG. 9, in one embodiment, the photocatalytic hydrogen production apparatus 100' may further comprise a light source unit 130 that irradiates light onto the reaction system. The type of light source unit 130 is not particularly limited, but may be a light source that irradiates artificial light or artificial sunlight. By further comprising a light source unit that irradiates artificial light or artificial sunlight, stable and consistent light irradiation conditions can be realized regardless of external environmental conditions, which can help improve the reproducibility and efficiency of the hydrogen evolution reaction.

In one embodiment, the photocatalyst may be a photocatalyst manufactured under acidic conditions.

Meanwhile, the photocatalytic hydrogen production method according to an embodiment of the present invention may comprise irradiating light onto a reaction system capable of accommodating a reactant comprising at least water, in the presence of a photocatalyst comprising a support and platinum dispersed at the atomic level on the surface of the support.

In one embodiment, the support may comprise titanium dioxide (TiO₂). In one embodiment, the content of platinum in the photocatalyst may be less than about 0.1 wt%.

The method of irradiating light is not particularly limited. In one embodiment, the irradiated light may be sunlight or artificial light or artificial sunlight irradiated through a light source. When utilizing artificial light or artificial sunlight, constant light intensity and wavelength conditions can be stably maintained, and when using natural sunlight, energy costs can be reduced. The present invention is not limited to a specific light source and can effectively operate under various light irradiation conditions.

Non-limiting examples of other types of light sources may include halogen lamps, metal halide lamps, xenon lamps, LEDs, fluorescent lamps, high-pressure mercury lamps, laser light sources, and the like. Since these light sources each have different characteristics such as light intensity, wavelength range, and energy efficiency, they can be selectively applied according to reaction conditions and purposes, and the present invention is not limited to the use of these light sources.

In one embodiment, the photocatalyst may be a photocatalyst manufactured under acidic conditions.

Hereinafter, embodiments of the present invention will be described. However, the embodiments described below are merely some embodiments of the present invention, and the scope of the present invention is not limited to the following embodiments.

### Dispersion of Atomic-Level Platinum

### Preparation Example

The atomic-level platinum structure of the present invention can be manufactured based on a wet chemical method. First, a selected support is dispersed in an appropriate solvent, and a platinum precursor is added thereto and mixed. The mixing amount of the platinum precursor was experimentally varied, and the actual platinum loading amount was confirmed via ICP-OES or equivalent analytical methods after preparation was complete. The pH of the mixed solution was experimentally compared by setting various conditions, and among these, it was confirmed that uniform platinum dispersion and stable immobilization were achieved under acidic conditions in the pH range of about 1 to 3. The mixture is sufficiently dispersed through stirring or sonication for a certain period of time. Thereafter, the reaction solution is filtered or centrifuged to separate the solid, which is then dried to secure a state in which the platinum precursor is adsorbed on the support surface. Next, the dried solid is heat-treated to immobilize platinum on the support surface.

### Experimental Example

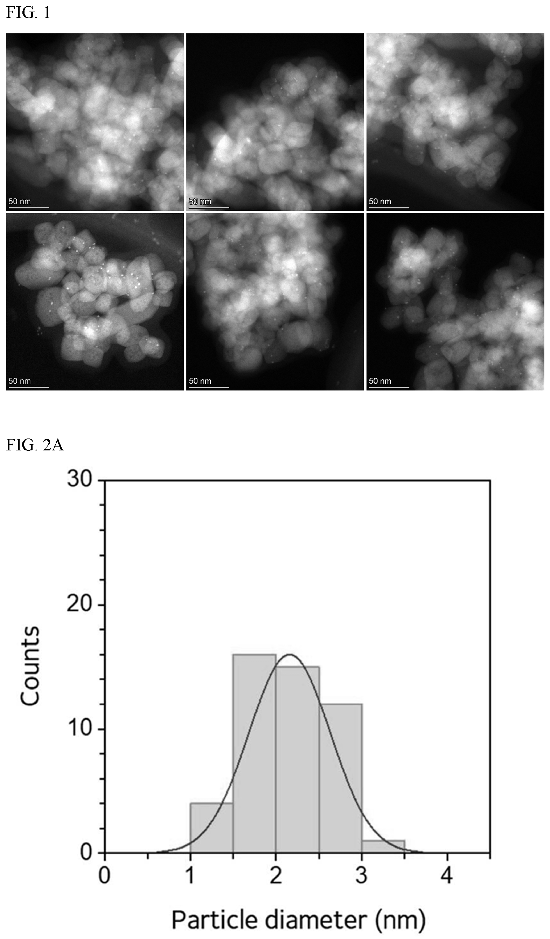

Referring to FIG. 1, FIG. 1 is a HAADF-STEM image taken after a photoreaction of a conventional Pt/TiO₂ single-atom catalyst, showing results under control conditions in which aggregated platinum (Pt) particles are observed. As shown in FIG. 1, platinum appearing as bright spots on the support surface exists in a clustered form, which suggests that the single-atom state was not maintained and some aggregation had occurred. This is an image taken particularly under conditions where the platinum loading amount exceeded the threshold value at about 0.211 wt%, and it is confirmed that bright platinum spots tend to accumulate in large numbers between support particles. Through FIG. 1, it can be confirmed that when the platinum loading amount increases above the threshold value, the dispersion in the single-atom state becomes unstable and aggregation can be induced, which confirms that the low-concentration loading conditions and density control-based dispersion stabilization technology proposed in the present invention can be effective in suppressing aggregation.

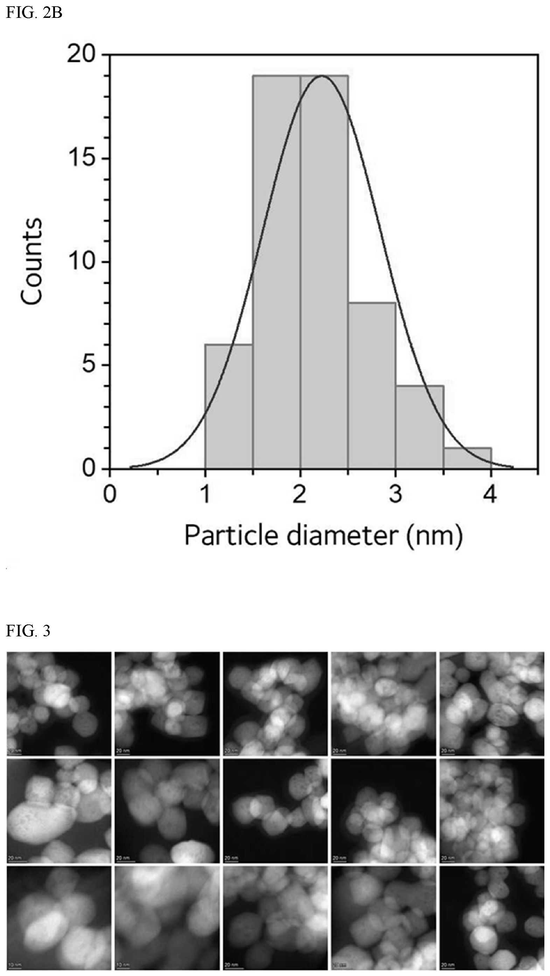

FIGS. 2A and 2B are diagrams showing the size distribution of platinum (Pt) particles observed after a photoreaction of a conventional Pt/TiO₂ single-atom catalyst. Referring to FIG. 2A, under conditions where 0.211 wt% Pt is dispersed in TiO₂ nanoparticles, the average size of Pt particles is about 2.16 nm, and the standard deviation is about 0.47 nm. Referring to FIG. 2B, under conditions where 0.183 wt% Pt is dispersed in TiO₂ nanoparticles, the average size of platinum particles is about 2.22 nm, and the standard deviation is about 0.61 nm. Through FIGS. 2A and 2B, it can be confirmed that under conditions where the platinum loading amount exceeds a certain threshold value, single-atom dispersion is not maintained, and particle aggregation can occur.

Referring to FIG. 3, FIG. 3 is a diagram showing a HAADF-STEM image taken after a photoreaction of a Pt/TiO₂ single-atom catalyst with adjusted surface density. As shown in FIG. 3, this is an image taken under conditions where platinum (Pt) is loaded at about 0.025 wt%, i.e., dispersed in the TiO₂ support at a concentration below the threshold value, and platinum is uniformly distributed in the form of bright spots throughout the support surface, with no aggregated particles observed. This is a result that clearly shows a state in which platinum is stably immobilized in the single-atom state. Through FIG. 3, it can be confirmed that the condition of controlling the platinum loading amount to below the threshold value proposed in the present invention is actually effective in suppressing aggregation and can serve as a catalyst manufacturing strategy capable of securing long-term structural stability.

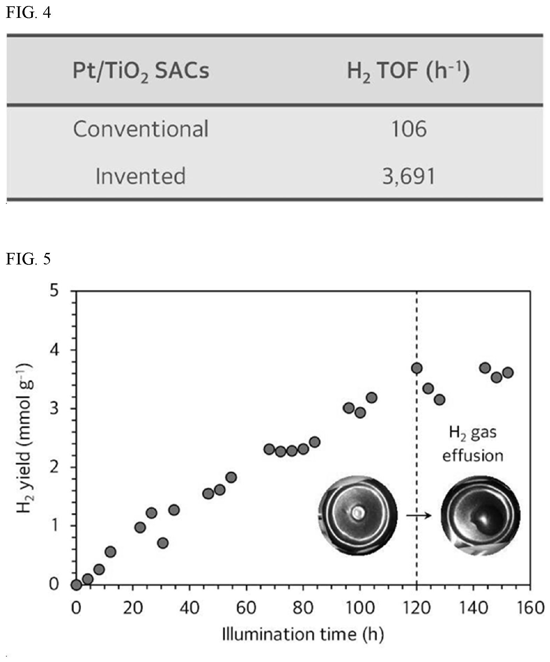

Referring to FIG. 4, FIG. 4 is a chart comparing the hydrogen turnover frequency (TOF) of Pt/TiO₂ single-atom catalysts. As shown in FIG. 4, the conventional Pt/TiO₂ single-atom catalyst exhibited a TOF value of about 106 per hour, whereas the catalyst according to the present invention exhibits a very high TOF value of 3,691 per hour. This means that the amount of hydrogen generated per unit time under the same reaction conditions is significantly higher in the catalyst of the present invention. Through FIG. 4, it can be confirmed that the single-atom platinum catalyst according to the present invention can achieve significantly higher catalytic activity in hydrogen evolution reactions compared to conventional technologies.

Referring to FIG. 5, FIG. 5 is a diagram showing results of a photocatalytic hydrogen production reaction performed under simulated solar light conditions for 152 consecutive hours using a Pt/TiO₂ single-atom catalyst with adjusted surface density, according to an embodiment of the present invention. As shown in FIG. 5, hydrogen production continuously increases from the beginning of the experiment to about 120 hours, showing a tendency for cumulative hydrogen to accumulate linearly, but thereafter the increase in production gradually plateaus. This apparent saturation state is interpreted as being attributed not to catalyst performance degradation, but to the occurrence of molecular effusion as hydrogen accumulated inside the sealed reactor increased the pressure. The photograph in the figure visually shows the cap deformation phenomenon due to such internal pressure increase. Through FIG. 5, it can be confirmed that the single-atom platinum catalyst according to the present invention has the durability to stably and continuously produce hydrogen even under long-term operation conditions of more than 150 hours, which means that it can have very excellent performance in terms of long-term operational stability compared to conventional catalysts.

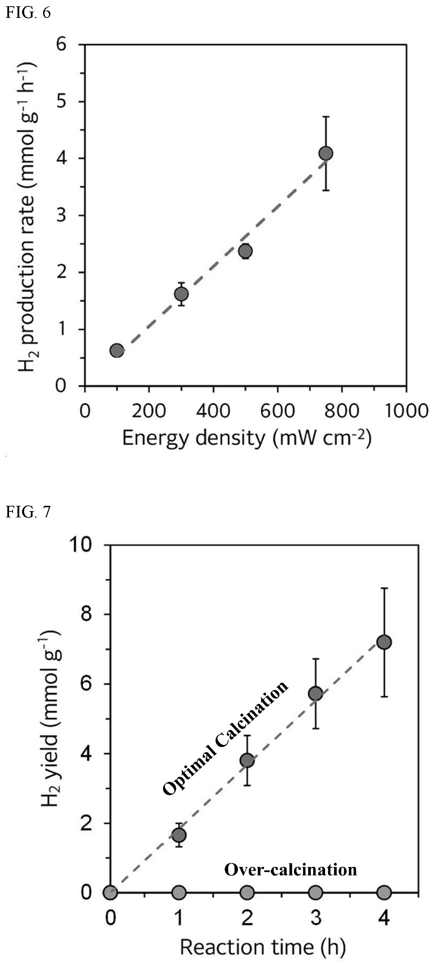

Referring to FIG. 6, FIG. 6 is a diagram showing results of a photocatalytic hydrogen production reaction performed under harsh conditions, i.e., at the maximum experimentally achievable light intensity, using a Pt/TiO₂ single-atom catalyst with adjusted surface density, according to an embodiment of the present invention. As shown in FIG. 6, as the incident light intensity increases from about 100 mW·cm⁻² to about 800 mW·cm⁻², the hydrogen generation amount also shows a tendency to increase linearly, and in particular, the catalytic activity appears to be stably maintained even under the highest light intensity conditions. This shows that the catalyst can continue the reaction without degradation even under conditions more than approximately 8 times the intensity of sunlight. Through FIG. 6, it can be confirmed that the single-atom platinum catalyst according to the present invention can maintain structural stability and high reaction activity even under extreme conditions such as high light intensity, which means that there is practical applicability even in environments such as high-power solar systems or concentrating photoreactors.

Referring to FIG. 7, FIG. 7 is a diagram comparing photocatalytic hydrogen production reaction performance of Pt/TiO₂ single-atom catalysts manufactured under an optimized heat-treatment temperature condition (below 900 °C) and a non-optimized condition (900 °C or above). As shown in FIG. 7, the catalyst heat-treated in the optimized temperature range shows a linear increase in hydrogen generation with increasing incident light intensity, whereas the catalyst under non-optimized conditions maintains a low level of hydrogen generation regardless of incident light intensity. This shows that heat-treatment conditions can affect the immobilization stability and reaction activity of platinum single atoms. Through FIG. 7, it can be confirmed that the heat-treatment conditions proposed in the present invention are effective in stably maintaining the active centers of the single-atom platinum catalyst and maximizing photoreaction efficiency.

### Photocatalytic Application

### Preparation Example

To construct the photocatalytic hydrogen production apparatus of the present invention, a photocatalyst was manufactured by the following method. First, titanium dioxide (TiO₂) particles used as a support were dispersed in distilled water to prepare a uniform suspension. Subsequently, a platinum precursor solution was added to the suspension, and the reaction was carried out under stirring conditions. The mixed solution after completion of stirring was dried after filtration and washing and then heat-treatment was performed to manufacture a photocatalyst in which platinum was dispersed at the atomic level.

### Example

The manufactured photocatalyst was introduced into a reaction system, and an aqueous solution was included as a reactant in the reaction system. Artificial light simulating sunlight was used as a light source and irradiated at a constant intensity.

### Experimental Example

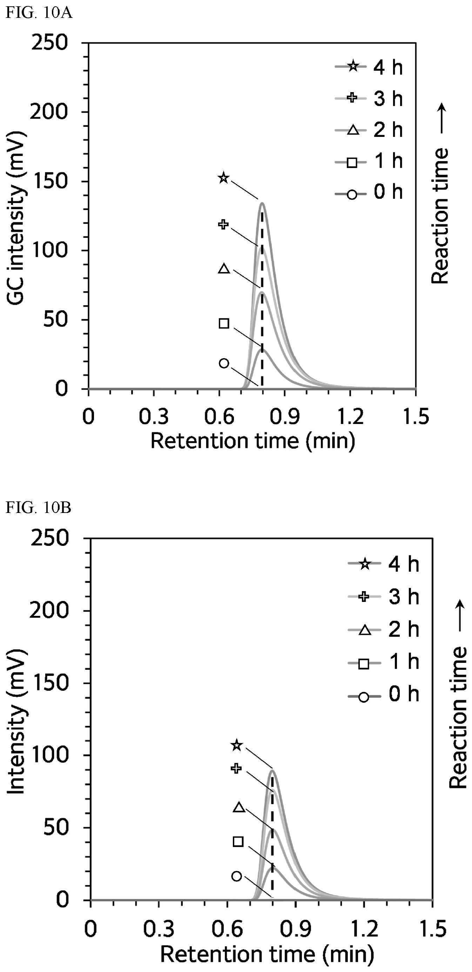

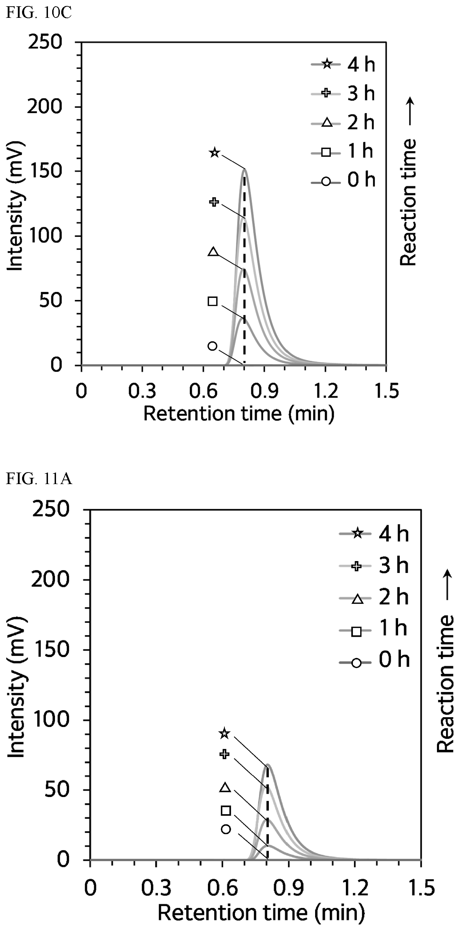

Referring to FIG. 10A, FIG. 10A is a diagram showing a gas chromatogram measured in a first run under identical reaction conditions for hydrogen quantification of a gas mixture generated in a hydrogen evolution reaction using a photocatalyst in which 0.03% platinum is dispersed at the atomic level. FIGS. 10B and 10C are diagrams showing gas chromatograms measured in a second run and a third run, respectively, under the same reaction conditions. Referring to FIGS. 10A to 10C, it can be confirmed that signal peaks of similar shape appear in the same time domain in each experiment. Through FIGS. 10A to 10C, it can be confirmed that repeated experimental results under the same conditions appear with high consistency.

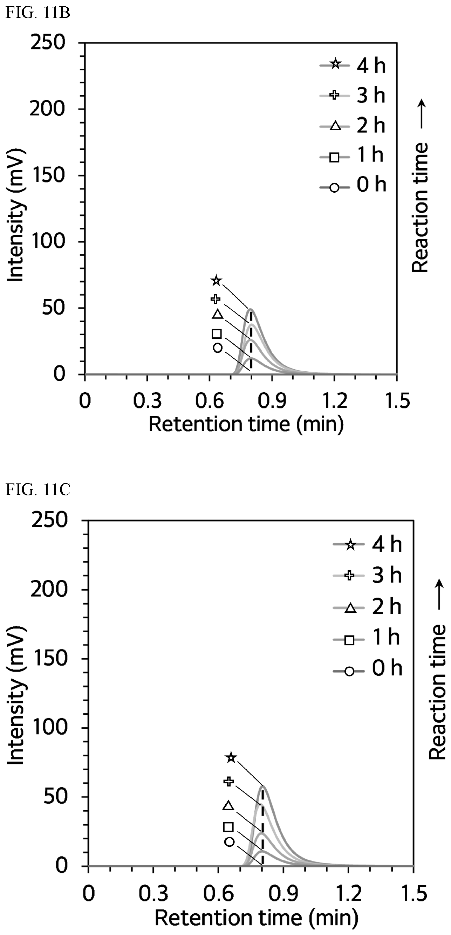

Referring to FIG. 11A, FIG. 11A is a diagram showing a gas chromatogram measured in a first run under identical reaction conditions for hydrogen quantification of a gas mixture generated in a hydrogen evolution reaction using a photocatalyst in which 1% platinum is dispersed in nanoparticle form. FIGS. 11B and 11C are diagrams showing gas chromatograms measured in a second run and a third run, respectively, under the same reaction conditions. Referring to FIGS. 11A to 11C, each graph shows the intensity of the detector signal over experimental time, and peaks presumed to correspond to hydrogen are observed at similar positions on the time axis in all experiments, but when referenced together with FIGS. 10A to 10C, the peak heights are generally low. Through FIGS. 11A to 11C, it can be confirmed that the amount of hydrogen generated is low when using a photocatalyst based on 1% platinum nanoparticles. This can be interpreted as a comparative result supporting that the atomic-level dispersed platinum photocatalyst proposed in the present invention can have superior reactivity and reproducibility.

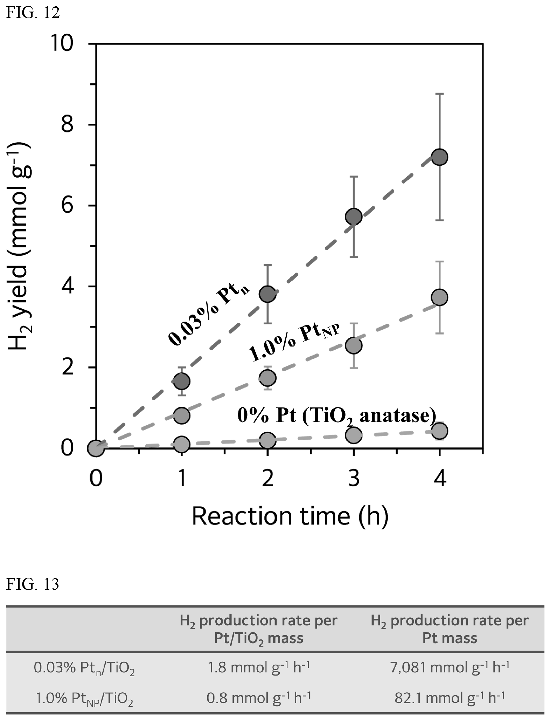

Referring to FIG. 12, FIG. 12 is a diagram showing changes in hydrogen production amount over reaction time in hydrogen evolution reactions using photocatalysts based on 0% platinum, 0.03% platinum (atomic level), and 1% platinum (nanoparticles). As shown in FIG. 12, hydrogen production shows a tendency to increase overall as reaction time increases, and it can be confirmed that hydrogen generation efficiency is clearly differentiated according to the platinum content and dispersion form. The photocatalyst with 0.03% platinum dispersed at the atomic level shows the highest hydrogen production amount over the entire time period, the photocatalyst based on 1% platinum nanoparticles shows a lower level, and the case without platinum shows the lowest hydrogen production amount. Through FIG. 12, it can be quantitatively confirmed that the atomic-level dispersed platinum photocatalyst according to the present invention has the highest hydrogen generation efficiency even under the same conditions. In addition, it suggests that even when using a very low content of platinum, superior catalytic activity can be exhibited compared to the nanoparticle form.

Referring to FIG. 13, FIG. 13 is a table comparing hydrogen production rates per catalyst mass and per platinum mass of photocatalysts based on 0.03% platinum (atomic level) and 1% platinum (nanoparticles). As shown in FIG. 13, 0.03% Ptₙ/TiO₂, as an example of an atomic-level platinum catalyst using platinum atoms, shows a hydrogen production rate of 1.8 mmol g⁻¹ h⁻¹ based on total catalyst mass, and a hydrogen production rate of 7081 mmol g⁻¹ h⁻¹ based on platinum mass. On the other hand, 1.0% PtNP/TiO₂, as an example using platinum nanoparticles, shows hydrogen production rates based on total catalyst mass and platinum mass of 0.8 mmol g⁻¹ h⁻¹ and 82.1 mmol g⁻¹ h⁻¹, respectively, which are lower values compared to the atomic-level platinum catalyst in all items. Through FIG. 13, it can be confirmed that the atomic-level dispersed catalyst with more than 30 times lower platinum content actually shows a higher hydrogen production rate even based on total catalyst mass, and in particular, the hydrogen production rate based on platinum mass shows about 86 times higher performance. Through this, it can be seen that the low-content atomic-dispersed platinum catalyst according to the present invention can have very excellent effects in terms of catalyst efficiency and resource utilization.

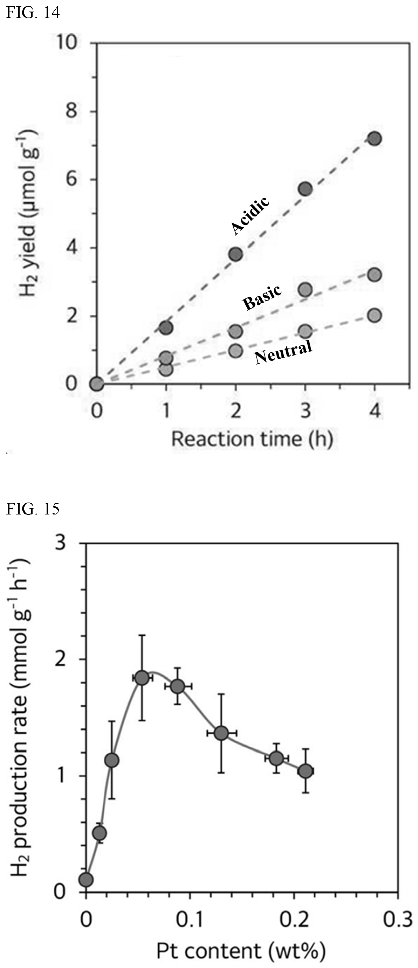

Referring to FIG. 14, FIG. 14 is a diagram comparing changes in activity of hydrogen evolution reactions using photocatalysts synthesized under acidic, neutral, and basic conditions. As shown in FIG. 14, all three conditions show a tendency for hydrogen generation to increase as reaction time increases, but it is confirmed that the photocatalyst synthesized under acidic conditions shows the highest reaction rate, followed by neutral conditions and basic conditions in decreasing order of reaction rate. Through FIG. 14, it can be confirmed that the photocatalyst synthesized under acidic conditions can show the best performance in terms of hydrogen evolution reaction activity. This suggests that the hydrogen production efficiency of the photocatalyst can vary greatly depending on reaction conditions, and that acidic environments can be comparatively effective in maximizing the catalyst performance of the present invention, but neutral and basic conditions are not excluded from the present invention.

### Optimization of H₂ Production Based on Total Pt/TiO₂ Catalyst

Referring to FIG. 15, FIG. 15 is a diagram showing the H₂ production rate per total catalyst mass of Pt/TiO₂ photocatalysts according to Pt loading amount. As shown in FIG. 15, the H₂ production rate shows volcano-type behavior in which it initially increases as the Pt loading amount increases and then decreases after a certain range. Specifically, when the Pt loading amount is at about 0.054 wt%, the H₂ production rate reaches a maximum value of about 1.841 mmol g⁻¹ h⁻¹, which is about 17.4 times higher than the TiO₂-only condition without Pt. These results show that from the perspective of overall catalyst-based productivity, the absolute loading amount must be secured above a certain level (about 0.05 to 0.09 wt%) to obtain optimal H₂ production performance, even if some Pt aggregation occurs. That is, in terms of overall catalyst efficiency, in the loading range slightly higher than the upper limit of single-atom stability of 0.025 wt%, the effect of increasing the number of Pt atoms temporarily offsets the activity decrease due to aggregation to realize maximum productivity, and when this is exceeded, aggregation acts dominantly and the production rate decreases.

### Optimization of H₂ Production Based on Single Pt Atom Utilization

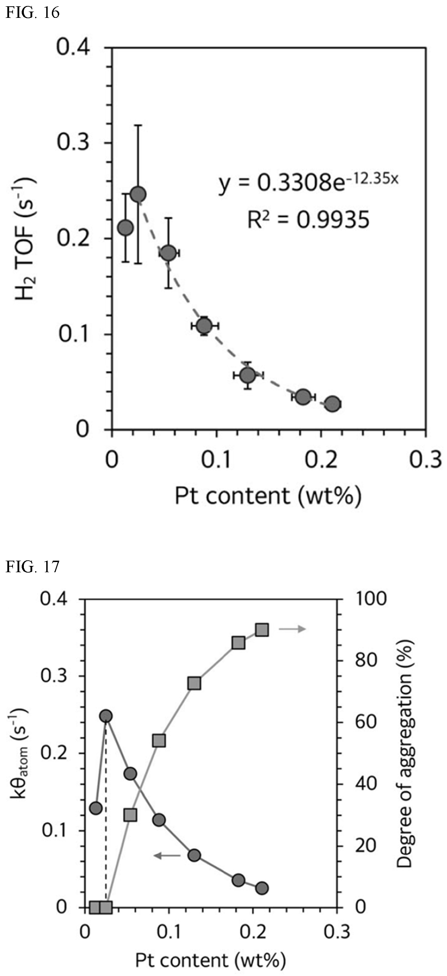

Referring to FIGS. 16 and 17, FIG. 16 is a diagram showing the H₂ production turnover frequency (TOF) per unit Pt atom of Pt/TiO₂ photocatalysts according to Pt loading amount, and FIG. 17 is a diagram reproducing experimental TOF and aggregation profiles using a structure-activity model. As shown in FIGS. 16 and 17, the TOF per unit Pt atom shows the maximum value at the lowest loading range of about 0.025 wt%, and thereafter shows a tendency to decrease rapidly in an exponential manner as the loading amount increases. The structure-activity model of FIG. 17 quantitatively reproduces this behavior and defines about 0.025 wt% as the critical dispersion limit (hereinafter referred to as "C*"). Below this critical value, the Pt single-atom state is stably maintained to ensure high TOF, whereas the moment the critical value is exceeded, aggregation begins and the density of single-atom sites decreases exponentially, causing TOF to drop sharply. This indicates that from the perspective of Pt atom utilization, controlling the loading amount to about 0.025 wt% or less is key for individual Pt atoms to function as independent active sites to the maximum extent. That is, from the perspective of efficient utilization of precious metal resources, the minimum loading condition that maintains single-atom stability is optimal, and through this, significantly higher hydrogen production activity can be achieved with the same amount of Pt used.

Although the present invention has been described above with reference to preferred embodiments, those skilled in the art will understand that various modifications and changes can be made to the present invention without departing from the spirit and scope of the present invention as set forth in the claims below.

### DESCRIPTION OF REFERENCE NUMERALS

- 100, 100': Photocatalytic hydrogen production apparatus
- 110: Photocatalyst
- 111: Support
- 112: Platinum
- 120: Reaction system
- 130: Light source unit

## Claims

1. A method for manufacturing a single-atom platinum catalyst, comprising: mixing and dispersing a support and a platinum precursor in an acidic reaction solution; and separating a solid from the reaction solution, drying, and heat-treating the solid, wherein the platinum precursor is mixed in the acidic reaction solution at a low concentration not exceeding a predetermined level.

2. The method for manufacturing a single-atom platinum catalyst of claim 1, wherein the platinum precursor is mixed in the acidic reaction solution at a low concentration such that a platinum loading amount in the single-atom platinum catalyst manufactured by the method for manufacturing a single-atom platinum catalyst is 0.1 wt% or less.

3. The method for manufacturing a single-atom platinum catalyst of claim 2, wherein the support comprises at least one of TiO₂ or a carbon-based support.

4. The method for manufacturing a single-atom platinum catalyst of claim 3, wherein the support is nanoparticles.

5. The method for manufacturing a single-atom platinum catalyst of claim 4, wherein the support is nanoparticles having a size of 20 to 30 nm.

6. The method for manufacturing a single-atom platinum catalyst of claim 1, wherein the platinum precursor comprises at least one of a salt containing Pt or H₂PtCl₆.

7. The method for manufacturing a single-atom platinum catalyst of claim 1, wherein the mixture is dispersed in the reaction solution by sonication during the mixing and dispersing.

8. A single-atom platinum catalyst manufactured by the method for manufacturing a single-atom platinum catalyst of claim 1.

9. The single-atom platinum catalyst of claim 8, wherein a platinum loading amount of the single-atom platinum catalyst is 0.1 wt% or less.
